# EUROPÄISCHE PATENTSCHRIFT

(11) **EP 1 204 525 B1**
(45) Veröffentlichungstag und Bekanntmachung des Hinweises auf die Patenterteilung: **05.02.2003**
(21) Anmeldenummer: 00952928.0
(22) Anmeldetag: 13.07.2000
(51) Int. Cl.: B29C 49/42, F16L 11/12, F16L 37/084, B29K 77/00, B29L 23/00, B29C 49/48

(54) **KÜHLMITTELROHR FÜR BRENNKRAFTMASCHINEN SOWIE VERFAHREN ZUR HERSTELLUNG DESSELBEN**
COOLANT TUBE FOR INTERNAL COMBUSTION ENGINES AND METHOD OF PRODUCING THE SAME
TUYAU POUR FLUIDE DE REFROIDISSEMENT DESTINE A UN MOTEUR A COMBUSTION INTERNE, ET SON PROCEDE DE PRODUCTION

(30) Priorität: 17.08.1999 DE 19938189
(43) Veröffentlichungstag der Anmeldung: 15.05.2002
(73) Patentinhaber: Kautex Textron GmbH & Co. KG., 53229 Bonn (DE)
(72) Erfinder: MOITZHEIM, Jürgen, D-53639 Königswinter (DE); LIMBACH, Michael, D-53773 Hennef (DE)
(74) Vertreter: Patentanwälte Lippert, Stachow, Schmidt & Partner
(86) Internationale Anmeldenummer: DE0002284
(87) Internationale Veröffentlichungsnummer: WO01012415

(56) Entgegenhaltungen:
- EP-A- 0 573 863
- WO-A-89/04755
- WO-A-92/14599
- US-A- 3 534 435
- US-A- 4 747 621
- US-A- 5 553 732
- DRUSCHE A: "SEAMLESS SILUTIONS" EUROPEAN PLASTICS NEWS,GB,IPC BUSINESS PRESS LTD. LONDON, Bd. 21, Nr. 8, 1. September 1994 (1994-09-01), Seiten 21-22, XP000474756 ISSN: 0306-3534

## Beschreibung

Kühlmittelrohre oder Kühlmittelschläuche an Kraftfahrzeugmotoren werden bislang als metallene Rohre oder metallene Schläuche ausgeführt, die jeweils an ihren Enden mit Kupplungselementen für eine Schnellkupplung als Rast- oder Schnappkupplung versehen sind. Die Kupplungselemente sind als metallene Hülsen, beispielsweise aus Aluminiumblech, ausgebildet und auf das Schlauch- oder Rohrende aufgepreßt oder aufgeklemmt. Diese bestehen beispielsweise aus einer Außenhülse und einer Innenhülse aus Blech, wobei der Schlauch oder das Rohr in den Ringraum zwischen der Außenhülse und der Innenhülse eingesetzt ist. Die Fixierung auf dem Schlauch oder dem Rohr erfolgt durch Kaltverformung der Außenhülse, beispielsweise durch Umlegen einer Bördelkante. Die Außenhülse ist umfänglich mit Rastnasen versehen, die mit korrespondierenden Rastausnehmungen und Rastfedern eines Kupplungsgegenstücks, beispielsweise an einem KFZ-Kühler, zusammenwirken. Die Innenhülse bildet einen Ringflansch zur Anlage an eine entsprechende Gegenfläche in dem Kupplungsgegenstück. Zwischen dem Ringflansch der Innenhülse und der Außenhülse wird eine umlaufende Nut als Dichtsitz für eine O-Ring-Dichtung gebildet.

Solche Kupplungsstücke sind verhältnismäßig aufwendig zu fertigen, insbesondere die Montage der Kupplungsstücke auf den Rohren oder Schläuchen, d.h. die Herstellung einer dichtenden und unlösbaren Verbindung mit den Rohren oder Schläuchen ist aufwendig und umständlich.

In der DE 195 43 318 A1 wird beispielsweise die Verbindung einer Fluidleitung aus Kunststoff mit einem rohrförmigen Kupplungselement aus Kunststoff beschrieben, wobei das Kupplungselement an die Leitung angespritzt ist. Hierzu wird der Endabschnitt des bereits fertigen Rohres bzw. der bereits fertigen Leitung aus Kunststoff auf einen zylindrischen Teil eines Formwerkzeugkerns aufgestellt und in einem separaten Arbeitsgang wird das Kupplungselement um den außerhalb des Rohrs liegenden Teil des Formwerkzeugkerns herumgespritzt.

Die Herstellung eines solchen Rohrs ist außerordentlich aufwendig.

Aus der WO 89/04755 ist ein Rohr nach Oberbegriff von Anspruch 1 bekannt, welches durch Extrusions-Saugblasformen erhalten wurde. Das dort beschriebene Rohr ist an einem oder beiden Enden mit Kupplungselementen versehen, die einstückig während der Fertigung angeformt wurden.

Bei einer Mehrzahl von denkbaren Anwendungen für ein solches Rohr, beispielsweise als Kühlmittelrohr an Kraftfahrzeugmotoren ist es wünschenswert, an den Anschlüssen des Rohrs oder Schlauchs Dichtmittel für verschiedene Temperaturbereiche des das Rohr durchströmenden Mediums bereitzustellen.

Der Erfindung liegt daher die Aufgabe zugrunde, ein Rohr oder einen Schlauch gemäß Oberbegriff von Anspruch 1 hinsichtlich dessen Einsetzbarkeit bei größeren Temperaturschwankungen zu verbessern.

Die Aufgabe wird gelöst mit den Merkmalen des Anspruchs 1.

Das Rohr im Rahmen der Erfindung kann selbstverständlich auch anderweitig Anwendung finden, beispielsweise bei Kühlaggregaten oder bei anderen Antriebskonzepten.

Ein solches einstückig mit an einem oder beiden Enden mit Kupplungselementen gefertigtes Rohr macht die getrennte Fertigung von Kupplungselementen und eine dichtende und unverlierbare Befestigung letzterer an dem Rohr entbehrlich, wodurch erheblich an Fertigungszeit und an Fertigungsaufwand eingespart wird. Insbesondere dadurch, dass das Rohr gemäß der Erfindung durch Extrusions-Blasformen erhalten wurde und das Rastmittel der Rastkupplung in der Außenkontur des betreffenden Rohrendes ausgebildet sind, kann die Fertigung des Rohrs mit zumindest einem Teil der Rastkupplung in einem Werkzeug erfolgen. Schließlich ist die Bereitstellung des Rohrs aus thermoplastischem Kunststoff wegen der damit verbundenen Gewichts- und Materialersparnis vorteilhaft. Kunststoff ist ein verhältnismäßig leichtes und preiswertes Material, dessen Elastizität und Zähigkeit sowie dessen Säure- und Temperaturbeständigkeit sich leicht durch die Wahl der richtigen Materialzusammensetzung einstellen lässt. Schließlich bietet sich die Möglichkeit, Rohre oder Schläuche zu fertigen, die über ihre Länge verschiedene Elastizitätsmodule bzw. Steifigkeiten aufweisen, wodurch sich Teile fertigen lassen, deren Handhabbarkeit für die Endmontage in einem Kraftfahrzeug optimiert ist.

Es ist für den Fachmann ersichtlich, dass die Begriffe Rohr oder Schlauch jedenfalls ein röhrenförmiges Element bezeichnen, für welches je nach Durchmesser und Steifigkeit der eine oder andere Begriff eher zutrifft, so dass im folgenden nur noch der Begriff Rohr verwendet wird.

Gemäß der bevorzugten Ausführungsform wurde das Rohr gemäß der Erfindung durch Saugblasformen, insbesondere durch Extrusions-Saugblasformen erhalten. Dieses Verfahren hat sich als besonders vorteilhaft zur Herstellung von Rohren erwiesen, die nicht rotationssymmetrisch ausgebildet sind, d.h. die einen im Raum gekrümmten Verlauf ihrer Längsachse aufweisen. Die Herstellung des Rohrs im Saugblasverfahren bietet zudem den Vorzug, dass dieses keine Schweißnähte aufweist.

Das Rohr ist mit wenigstens einem Einsatzstutzen als separates Bauteil versehen, der einen Flansch zur Anlage an eine Gegenfläche in einem Kupplungsgegenstück oder an dem Anschlussteil aufweist. Dieser Einsatzstutzen ist vorteilhafterweise unverlierbar in das betreffende Rohrende eingesetzt. Besonders vorteilhaft ist es, wenn der Einsatzstutzen mit dem betreffenden Rohrende unlösbar verrastet ist. Hierzu kann dieser an seinem Außenumfang Rastnasen aufweisen, die mit einer umlaufenden Sicke als Rastvertiefung oder einem umlaufenden Absatz in der Innenwandung des Rohrs zusammenwirken.

Das Einsatzstück kann beispielsweise aus thermoplastischem Kunststoff in einem Arbeitsgang durch Blasformen oder Saugblasformen mit dem Rohr erhalten worden sein, wobei sich jedoch bei einem solchen Herstellungsverfahren die Ausbildung des Flansches zur stirnseitigen Anlage an einer Gegenfläche in einem Kupplungsgegenstück oder an einem Anschlussbauteil schwierig gestaltet. Es ist deshalb besonders vorteilhaft, wenn der Einsatzstutzen durch Spritzgießen aus thermoplastischem Kunststoff erhalten wurde. Dieser kann die gleiche Materialzusammensetzung wie das Rohr aufweisen.

Bei der bevorzugten Ausführungsform des Rohrs ist das jeweils die Rastkupplung bildende Ende aufgeweitet, und der Einsatzstutzen ist gegen die Rohrinnenwandung, vorzugsweise im Bereich des regulären Querschnitts des Rohrs abgedichtet.

Das jeweils die Rastkupplung bildende Ende des Rohrs kann einen eingezogenen Bund aufweisen, der mit dem Flansch des Einsatzstutzens einen umlaufenden Dichtsitz zur Aufnahme eines O-Rings bildet.

Das von dem Flansch abliegende Ende des Einsatzstutzens kann ebenfalls eine umlaufende Nut zur Aufnahme eines O-Rings aufweisen, welcher dichtend gegen die Innenwandung des Rohrs etwa im Bereich des regulären Rohrdurchmessers anliegt.

Ein so ausgebildetes zweiteiliges Kupplungselement, von welchem der einstückig mit dem Rohr ausgebildete Teil der Rastkupplung den eigentlichen mit dem Kupplungsgegenstück zusammenwirkenden Teil bildet, eröffnet die Möglichkeit, verschiedene Dichtmittel für verschiedene Temperaturbereiche des das Rohr durchströmenden Mediums bereitzustellen. Beispielsweise kann die Abdichtung des Einsatzstutzens gegen das Rohr als Dichtung für den Tieftemperaturbereich ausgelegt sein, wohingegen die Dichtung zwischen dem Flansch des Einsatzstutzens und dem Ende des Rohrs als Hochtemperaturdichtung ausgelegt sein kann. Auch die umgekehrte Konfiguration ist möglich.

Vorzugsweise besteht das Rohr gemäß der Erfindung aus Polyamid. Besonders bevorzugt wird eine Ausführungsform des Rohrs aus glasfaserverstärktem Polyamid.

Das erfindungsgemäße Verfahren zur Herstellung eines Rohrs oder Schlauches aus thermoplastischem Kunststoff durch Extrusions-Saugblasformen, insbesondere als Kühlmittelrohr für Brennkraftmaschinen, bei welchem an wenigstens einem Ende des Rohrs wenigstens ein Teil einer Rastkupplung oder Schnappkupplung in einem Arbeitsgang mit dem Rohr einstückig angeformt wird, wobei Rastmittel der Rastkupplung in der Außenkontur des betreffenden Rohrendes ausgeformt werden, zeichnet sich aus durch die Herstellung wenigstens eines Einsatzstutzens aus thermoplastischem Kunststoff als separates Bauteil, wobei der Einsatzstutzen mit einem Flansch zur dichtenden Anlage an eine Gegenfläche eines Kupplungsgegenstücks oder eines Anschlussbauteils versehen wird, und durch das unverlierbare Verbinden des Einsatzstutzens mit einem Ende des Rohrs.

Für die Wirksamkeit der an das Rohr angeformten Kupplung ist eine unlösbare oder unverlierbare Verbindung des Einsatzstutzens mit dem Rohr nicht technisch notwendig, jedoch bietet eine solche Verbindung Vorzüge bei der Anlieferung, Lagerhaltung und Bereitstellung der Rohre zur Montage.

Alternativ zur Herstellung des Einsatzstutzens als separates Bauteil kann vorgesehen sein, daß ein Einsatzstutzen zusammen mit dem Rohr in einem Arbeitsgang durch Saugblasformen hergestellt wird und daß der Einsatzstutzen in einem weiteren Arbeitsgang von dem Rohr abgetrennt wird, um unverlierbar in ein Ende des Rohrs eingesetzt zu werden.

Die Erfindung wird nachstehend anhand eines in den Zeichnungen dargestellten Ausführungsbeispiels erläutert.

Es zeigen:
- Fig. 1: eine Ansicht des Rohrs gemäß der Erfindung mit angeformten Rastkupplungen,
- Fig. 2: einen Schnitt durch ein Rohrende,
- Fig. 3: einen Schnitt durch das Rohrende mit eingesetztem Einsatzstutzen,
- Fig. 4: eine Ansicht eines in das Rohrende einzusetzenden Einsatzstutzens,
- Fig. 5: eine perspektivische Ansicht des an einem Anschlußbauteil vorgesehenen Kupplungsgegenstücks und
- Fig. 6-9: schematische Darstellungen, die verschiedene Verfahrensschritte des Extrusions-Saugblasformens eines Rohrs gemäß der Erfindung darstellen.

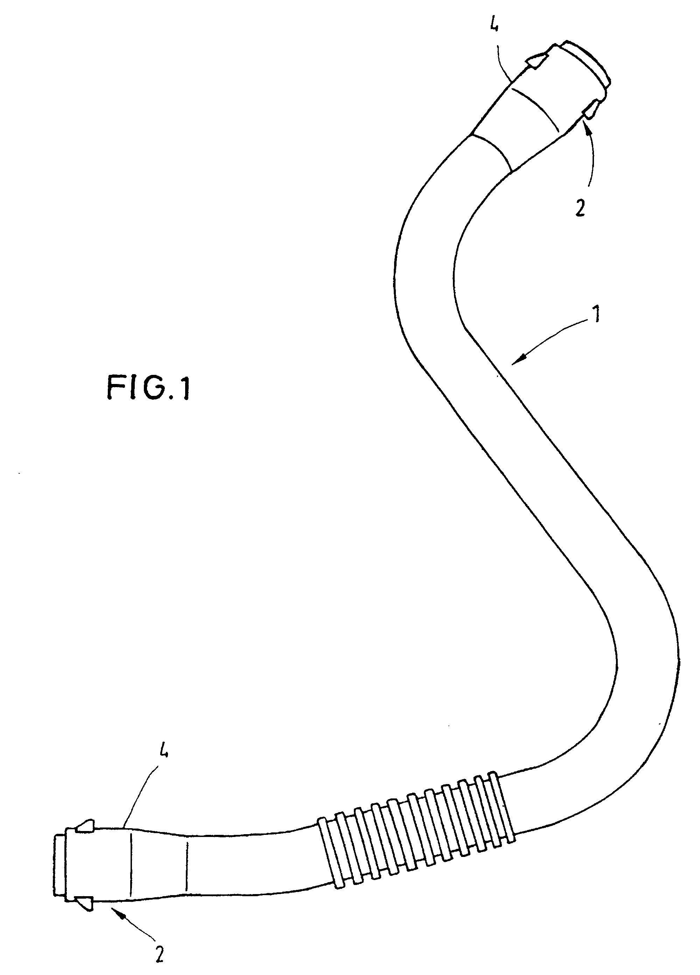

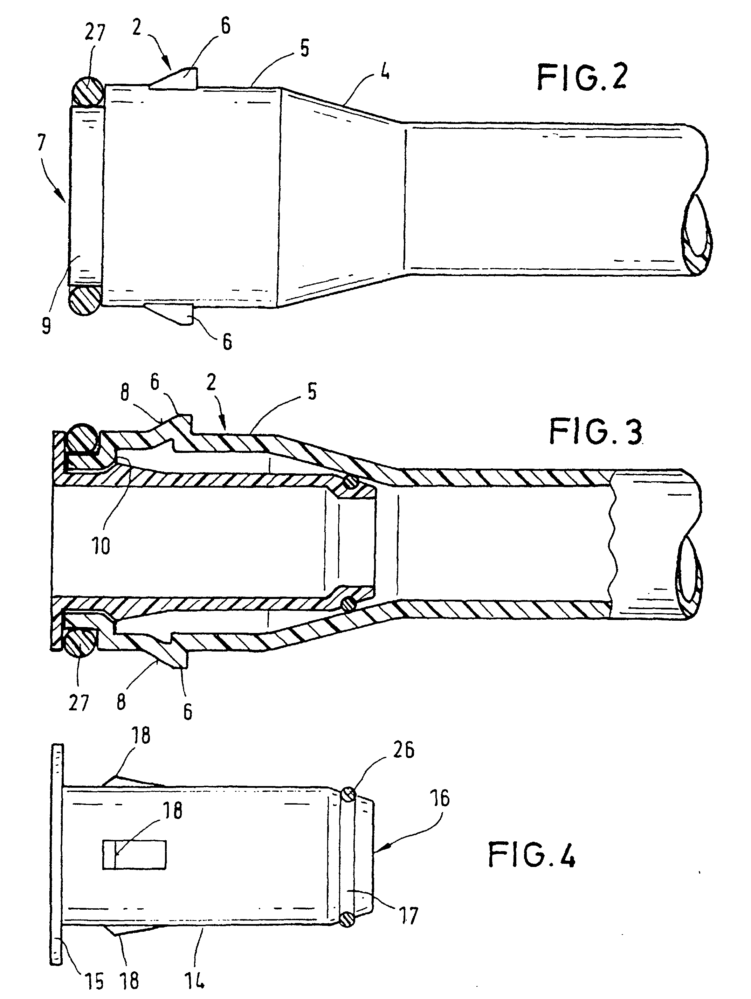

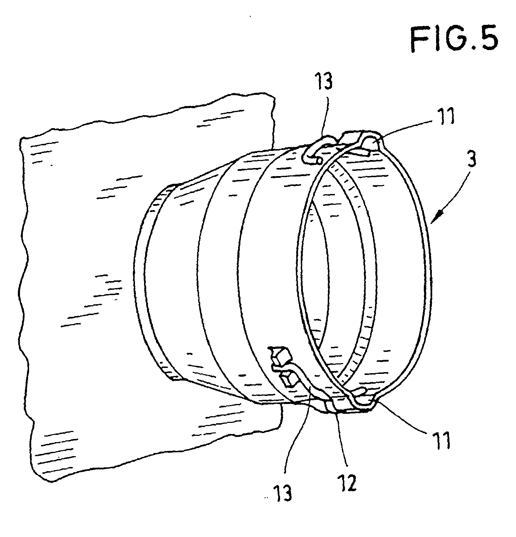

In den Figuren 1 und 2 ist das mit 1 bezeichnete Rohr gemäß der Erfindung dargestellt, welches als Kühlwasserrohr für einen Kraftfahrzeugmotor ausgebildet ist. Das Rohr 1 wurde durch Extrusions-Saugblasformen erhalten und besteht aus glasfaserverstärktem Polyamid. An jedem Rohrende ist eine Rastkupplung 2 angeformt, die während des Saugblasformens des Rohrs 1 in einem Arbeitsgang mit hergestellt wurde. Die Rastkupplungen 2 sind komplementär zu einem in Fig. 5 dargestellten Kupplungsgegenstück 3 ausgebildet, in welches diese dichtend einrastbar sind.

Die Längsachse des Rohrs 1 hat einen im Raum gekrümmten Verlauf, das Rohr 1 ist insgesamt asymmetrisch ausgebildet. Die Rohrenden sind im Bereich der Rastkupplungen 2 etwa konisch aufgeweitet. An die mit 4 bezeichneten Aufweitungen schließt sich ein zylindrischer Abschnitt 5 an, über dessen Außenumfang verteilt mehrere Rastnasen 6 angeordnet sind. Die Rastnasen 6 besitzen eine halbtrapezoide Querschnittskontur und bilden jeweils in Richtung auf die Rohrmündung 7 eine Auflaufschräge 8.

Im Bereich der Rohrmündung 7 ist das Rohr 1 mit einem eingezogenen Bund 9 versehen; die Durchmesserstufe zwischen dem zylindrischen Abschnitt 5 und dem Bund 9 bildet in der Innenwandung des Rohrs 1 aufgrund dessen Herstellung als blasgeformtes Teil einen umlaufenden Absatz 10 aus, auf den nachstehend noch eingegangen wird.

Die durch Extrusions-Saugblasformen erhaltene Außenkontur der Rastkupplung 2 entspricht etwa der Außenkontur von bekannten mehrteiligen Kupplungselementen aus Blech, die mit dem in Fig. 5 dargestellten Kupplungsgegenstück zusammenwirken, welches nicht Gegenstand der Erfindung ist. Die Rastkupplung 2 wird in das Kupplungsgegenstück 3 so eingesetzt, daß die Rastnasen 6 in sich in Einschubrichtung erstreckende Nutkanäle 11 des Kupplungsgegenstücks 3 eingesetzt werden. Quer zur Einschubrichtung sind in den Nutkanälen 11 Rastfederschlitze 12 vorgesehen, welche von Rastfedern 13 durchsetzt werden. Die Rastfedern 13 werden über die Auflaufschrägen 8 der Rastnasen 6 radial auswärts gezwungen und federn hinter den Rastnasen 6 in ihre Ausgangslage zurück, so daß die betreffende Rastkupplung 2 des Rohrs 1 mit dem Kupplungsgegenstück 3 unlösbar verrastet ist.

Bei dem beispielsweise dargestellten Rohr sind insgesamt zwei Rastnasen 6 vorgesehen. Es ist für den Fachmann ersichtlich, daß die Rastkupplung mehr als zwei Rastnasen oder sogar einen umlaufenden Rastvorsprung aufweisen kann.

Um eine hinreichende Abdichtung der Rastkupplung 2 in dem Kupplungsgegenstück 3 zu erzielen, ist ein mit 14 bezeichneter Einsatzstutzen vorgesehen, der aus Polyamid im Spritzgießverfahren hergestellt wurde. Der Einsatzstutzen 14 ist im wesentlichen als hohlzylindrisches Steckelement ausgebildet, welches an einem Ende mit einem Ringflansch 15 versehen ist. Wie dies aus Fig. 4 ersichtlich ist, bildet der Einsatzstutzen 14 einen Teil der an dem Rohr 1 vorgesehenen Kupplung und ist so in das Rohr 1 eingesetzt, daß der Ringflansch 15 die Stirnfläche der Rohrmündung 7 bildet. Der Ringflansch 15 ist verhältnismäßig dünnwandig ausgebildet, so daß dieser beim Einsetzen in das Kupplungsgegenstück 3 in gewissen Grenzen nachgiebig ist.

Der Einsatzstutzen 14 ist im Bereich seines Einführendes 16 mit einer umlaufenden Ringnut 17 versehen, die eine O-Ring-Dichtung 26 aufnimmt. Im Bereich des einen Kragen bildenden Ringflansches 15 des Einsatzstutzens 14 sind auf dem Außenumfang des zylindrischen Tubus des Einsatzstutzens 14 ebenfalls Rastnasen 18 vorgesehen, die mit dem umlaufenden Absatz 10 in der Innenwandung des Rohrs 1 zusammenwirken. Die Rastnasen 18 bilden ebenfalls Auflaufschrägen, die in Richtung des Einführendes 16 des Einsatzstutzens 14 geneigt sind. Die Rastnasen 18 und der umlaufende Absatz 10 sind so ausgebildet bzw. wirken derart zusammen, daß der Einsatzstutzen 14 unverlierbar in das betreffende Rohrende eingeschnappt bzw. eingerastet werden kann. Ein Lösen oder Herausziehen des Einsatzstutzens ist nur unter Aufbringung größerer Kräfte möglich. Es ist für den Fachmann ersichtlich, daß eine Sicherung des Einsatzstutzens 14 nicht erforderlich ist, wenn die Rastkupplung 2 in das Kupplungsgegenstück 3 eingesetzt ist.

Der Ringflansch 15 bildet bei in das Rohr 1 eingeschnapptem Einsatzstutzen 14 zusammen mit dem eingezogenen Bund 9 des Rohrs 1 einen umlaufenden Dichtsitz zur Aufnahme einer weiteren O-Ring-Dichtung 27. Mit dieser O-Ring-Dichtung 27 wird die Abdichtung des Rohrs 1 gegen das Kupplungsgegenstück 3 erzielt. Der Ringflansch 15 liegt, wenn die Rastkupplung 2 und das Kupplungsgegenstück 3 ineinander eingesetzt sind, gegen eine Gegenfläche oder Dichtfläche des Kupplungsgegenstücks 3 an.

Die im Bereich des Einführendes 16 des Einsatzstutzens 14 vorgesehene O-Ring-Dichtung liegt an der Innenwandung des Rohrs 1 etwa im Bereich dessen regulären Durchmessers an und dichtet den Einsatzstutzen 14 gegen das Rohr 1 ab.

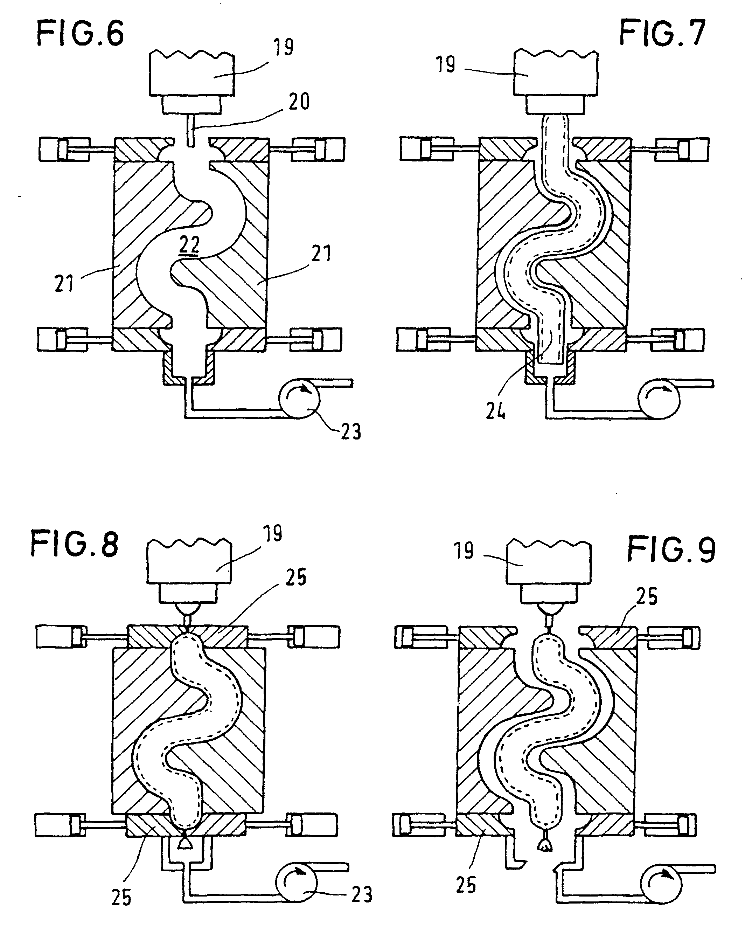

Das Verfahren zur Herstellung des Rohrs gemäß der Erfindung ist in den Figuren 6-9 schematisch dargestellt.

Mit 19 ist ein Extrusionskopf bezeichnet, der mit einem Blasdorn 20 versehen ist. Aus dem Extrusionskopf wird ein Schlauch aus erweichtem thermoplastischen Material in ein geschlossenes zweiteiliges Werkzeug 21 extrudiert, dessen Kavität 22 der Kontur des fertigen zu formenden Rohrs entspricht. Wie insbesondere Figur 6 zu entnehmen ist, wird die Wanderung des extrudierten Schlauchs durch die Kavität 22 durch eine am unteren Ende der Kavität 22 vorgesehene Saugvorrichtung 23 unterstützt, wobei der Schlauch 24 bzw. das Extrudat mit Vorblasluft aus dem Blasdorn 20 beaufschlagt wird. Nachdem der Schlauch 24 in der vorgewählten Länge die Kavität 22 ausfüllt, wird der Materialausstoß an dem Extrusionskopf 19 beendet. Jeweils an dem oberen und unteren Ende des Werkzeugs wird der Schlauch 24 mittels sich schließender Schieber 25 abgeklemmt. Sowohl die Saugluft als auch die Blasluft werden abgestellt. Nach Öffnen der Schieber 25 und des Werkzeugs 21 kann der fertige Artikel aus der Form entnommen werden.

Die Vorzüge des zuvor beschriebenen Verfahrens im Hinblick auf das Rohr gemäß der Erfindung liegen auf der Hand. Das Rohr kann ohne Naht gefertigt werden. Über die Steuerung des von der Saugvorrichtung 23 erzeugten Unterdrucks läßt sich das Extrudat in der gewünschten Länge auch in Formen mit räumlich komplexer Struktur einziehen. Schließkraft für das Werkzeug wird nur zum Zuhalten gegen den Blasdruck benötigt.

Selbstverständlich ist das Rohr gemäß der Erfindung auch als herkömmlicher Blasformartikel herstellbar.

### Bezugszeichenliste

- 1: Rohr
- 2: Rastkupplung
- 3: Kupplungsgegenstück
- 4: Aufweitung
- 5: zylindrischer Abschnitt
- 6: Rastnasen
- 7: Rohrmündung
- 8: Auflaufschrägen
- 9: Bund
- 10: Absatz
- 11: Nutkanäle
- 12: Rastfederschlitze
- 13: Rastfedern
- 14: Einsatzstutzen
- 15: Ringflansch
- 16: Einführende
- 17: Ringnut
- 18: Rastnasen
- 19: Extrusionskopf
- 20: Blasdorn
- 21: Werkzeug
- 22: Kavität
- 23: Saugvorrichtung
- 24: Schlauch
- 25: Schieber
- 26: O-Ringe
- 27: O-Ringe

## Patentansprüche

1. Rohr oder Schlauch, welches oder welcher durch Blasformen aus thermoplastischem Kunststoff erhalten wurde, insbesondere als Kühlmittelrohr für Brennkraftmaschinen, das an wenigstens einem Ende mit wenigstens einem Teil einer Rast- oder Schnappkupplung versehen ist, welches bei der Herstellung des Rohrs einstückig angeformt wurde, wobei Rastmittel der Rastkupplung (2) in der Außenkontur des betreffenden Rohrendes ausgebildet sind, **dadurch gekennzeichnet, dass** wenigstens ein Einsatzstutzen (14) als separates Bauteil, das einen Flansch (15) zur dichtenden Anlage an eine Gegenfläche in einem Kupplungsgegenstück (3) oder an einem Anschlussbauteil aufweist, in das betreffende Rohrende eingesetzt und in diesem unlösbar verrastet ist und dass der Einsatzstutzen (14) gegen die Rohrinnenwandung abgedichtet ist.

2. Rohr nach Anspruch 1, welches durch Saugblasformen, insbesondere durch Extrusions-Saugblasformen erhalten wurde.

3. Rohr nach einem der Ansprüche 1 oder 2, **dadurch gekennzeichnet, dass** der Einsatzstutzen (14) an seinem Außenumfang Rastnasen (18) aufweist, die mit einer umlaufenden Sicke als Rastvertiefung oder einem umlaufenden Absatz (10) in der Innenwandung des Rohrs (1) zusammenwirken.

4. Rohr nach einem der Ansprüche 1 bis 3, **dadurch gekennzeichnet, dass** der Einsatzstutzen (14) aus thermoplastischem Kunststoff besteht und durch Spritzgießen erhalten wurde.

5. Rohr nach einem der Ansprüche 1 bis 4, **dadurch gekennzeichnet, dass** das jeweils die Rastkupplung (2) bildende Ende des Rohrs aufgeweitet ist und dass der Einsatzstutzen (14) gegen die Rohrinnenwandung etwa im Bereich des regulären Querschnitts des Rohrs (1) abgedichtet ist.

6. Rohr nach einem der Ansprüche 1 bis 5, **dadurch gekennzeichnet, dass** das jeweils die Rastkupplung (2) bildende Ende des Rohrs einen eingezogenen Bund (9) aufweist, der mit dem Flansch (15) des Einsatzstutzens (14) einen umlaufenden Dichtsitz bildet, vorzugsweise zur Aufnahme eines O-Rings (27).

7. Rohr nach einem der Ansprüche 1 bis 6, **dadurch gekennzeichnet, dass** das von dem Flansch (15) abliegende Ende des Einsatzstutzens (14) eine umlaufende Nut (17) zur Aufnahme eines O-Rings (26) aufweist, welcher dichtend gegen die Innenwandung des Rohrs (1) etwa im Bereich des regulären Rohrdurchmessers anliegt.

8. Rohr nach einem der Ansprüche 1 bis 7, **dadurch gekennzeichnet, dass** es aus Polyamid besteht.

9. Rohr nach einem der Ansprüche 1 bis 8, **dadurch gekennzeichnet, dass** es aus glasfaserverstärktem Polyamid besteht.

10. Verfahren zur Herstellung eines Rohrs oder Schlauchs (1) aus thermoplastischem Kunststoff durch Extrusions-Saugblasformen, insbesondere als Kühlmittelrohr für Brennkraftmaschinen, bei dem an wenigstens einem Ende des Rohrs wenigstens ein Teil einer Rast- oder Schnappkupplung in einem Arbeitsgang mit dem Rohr einstückig angeformt wird, wobei Rastmittel in der Außenkontur des betreffenden Rohrendes ausgeformt werden, **gekennzeichnet durch** die Herstellung wenigstens eines Einsatzstutzens aus thermoplastischem Kunststoff als separates Bauteil, wobei der Einsatzstutzen mit einem Flansch (15) zur dichtenden Anlage an eine Gegenfläche eines Kupplungsgegenstücks (3) oder eines Anschlussbauteils versehen wird, und das unverlierbare Verrasten des Einsatzstutzens (14) in dem Ende des Rohrs.

11. Verfahren nach Anspruch 10, **dadurch gekennzeichnet, dass** ein Einsatzstutzen (14) mit einem Flansch (15) zur Anlage eines Kupplungsgegenstücks (3) oder eines Anschlussbauteils zusammen mit dem Rohr in einem Arbeitsgang durch Saugblasformen hergestellt wird und dass der Einsatzstutzen in einem weiteren Arbeitsgang von dem Rohr abgetrennt wird, um unverlierbar in einem Ende des Rohrs eingesetzt zu werden.

## Claims

1. A pipe or hose which was obtained by blow moulding from thermoplastic material, in particular as a coolant pipe for internal combustion engines, which is provided at at least one end with at least one part of a detent or snap-action coupling which in production of the pipe was formed thereon in one piece, wherein detent means of the detent coupling (2) are provided in the external contour of the pipe end in question, **characterised in that** at least one insertion connection portion (14) as a separate component, which has a flange (15) for sealingly bearing against a counterpart surface in a coupling portion (3) or against a connection component is inserted into the respective pipe end and is non-releasably latched therein and that the insert pipe connection (14) is sealed off in relation to the pipe internal wall.

2. A pipe according to claim 1 which was produced by suction blow moulding, in particular by extrusion suction blow moulding.

3. A pipe according to one of claims 1 and 2 **characterised in that** the insertion connection portion (14) has at its external peripheral surface detent projections (18) which co-operate with a peripherally extending ridge as a detent recess or a peripherally extending step (10) in the internal wall of the pipe (1).

4. A pipe according to one of claims 1 to 3 **characterised in that** the insert connection portion (14) comprises thermoplastic material and was produced by injection moulding.

5. A pipe according to one of claims 1 to 4 **characterised in that** the respective end of the pipe forming the detent coupling (2) is expanded and the insert connection portion (14) is sealed in relation to the internal wall of the pipe substantially in the region of the regular cross-section of the pipe (1).

6. A pipe according to one of claims 1 to 5 **characterised in that** the respective end of the pipe forming the detent coupling (2) has an inwardly disposed collar (9) which with the flange (15) of the insert connection portion (14) forms a peripherally extending sealing seat, preferably for accommodating an O-ring (27).

7. A pipe according to one of claims 1 to 6 **characterised in that** the end of the insertion connection portion (14), which is remote from the flange (15), has a peripherally extending groove (17) for receiving an 0-ring (26) which bears sealingly against the inside wall of the pipe (1) substantially in the region of the regular pipe diameter.

8. A pipe according to one of claims 1 to 7 **characterised in that** it comprises polyamide.

9. A pipe according to one of claims 1 to 8 **characterised in that** it comprises glass reinforced-reinforced polyamide.

10. A process for the production of a pipe or hose (11) of thermoplastic material by extrusion suction blow moulding, in particular as a coolant pipe for internal combustion engines, **characterised in that** at at least one end of the pipe at least one part of a detent or snap-action coupling is formed in one piece with the pipe in a working operation, wherein detent means are formed in the external contour of the respective pipe end, **characterised by** the production of at least one insert connection portion of thermoplastic material as a separate component, wherein the insert connection portion is provided with a flange (15) for sealingly bearing against a counterpart surface of a counterpart coupling portion (3) or a connection component, and by non-releasable latching of the insert connection portion (14) in the end of the pipe.

11. A process according to claim 10 **characterised in that** an insert connection portion (14) having a flange (15) for bearing against a counterpart coupling portion (3) or a connection component is produced together with the pipe in one working operation by suction blow moulding, and that the insert connection portion is separated from the pipe in a further working operation in order to be non-losably inserted into an end of the pipe.

## Revendications

1. Tuyau ou tuyau flexible, qui a été réalisé en matière thermoplastique par soufflage sur matrice, en particulier sous forme de tuyau pour fluide de refroidissement destiné à des moteurs à combustion interne, lequel est muni à au moins une extrémité d'au moins une partie d'un raccord à encliqueter ou raccord à déclic, qui a été formée d'une seule pièce contre le tuyau au moment de la fabrication de celui-ci, des moyens à encliqueter du raccord à encliqueter (2) étant réalisés dans le contour extérieur de l'extrémité concernée du tuyau, **caractérisé en ce qu'**au moins une tubulure de communication (14) est conçue sous forme de. pièce séparée, qui comporte une collerette (15) destinée à former un appui étanche contre une surface inverse dans une partie de raccord complémentaire (3) ou contre une pièce d'assemblage, dans laquelle est insérée l'extrémité concernée du tuyau et est encliquetée de manière inamovible dans celle-ci, et **en ce que** la tubulure de communication (14) est rendue étanche par rapport à la paroi intérieure du tuyau.

2. Tuyau selon la revendication 1, lequel a été réalisé par soufflage sur matrice, en particulier par extrusion-soufflage.

3. Tuyau selon la revendication 1 ou 2, **caractérisé en ce que** la tubulure de communication (14) comporte sur sa périphérie extérieure des ergots de blocage (18), qui coopèrent avec un collet périphérique formant un creux d'encliquetage ou avec un talon périphérique (10) dans la paroi intérieure du tuyau (1).

4. Tuyau selon une des revendications 1 à 3, **caractérisé en ce que** la tubulure de communication (14) est réalisée en matière thermoplastique et a été fabriquée par moulage par injection.

5. Tuyau selon une des revendications 1 à 4, **caractérisé en ce que** chacune des extrémités du tuyau formant le raccord à encliqueter (2) est élargie et **en ce que** la tubulure de communication (14) est rendue étanche par rapport à la paroi intérieure du tuyau sensiblement dans la zone de la section régulière du tuyau (1).

6. Tuyau selon une des revendications 1 à 5, **caractérisé en ce que** chacune des extrémités du tuyau formant le raccord à encliqueter (2) comporte une bride (9) en retrait, qui forme avec la collerette (15) de la tubulure de communication (14) un siège étanche périphérique, destiné de préférence à recevoir un joint torique (27).

7. Tuyau selon une des revendications 1 à 6, **caractérisé en ce que** l'extrémité de la tubulure de communication (14) éloignée de la collerette (15) comporte une rainure périphérique (17) destinée à recevoir un joint torique (26), qui est en appui étanche par rapport à la paroi intérieure du tuyau (1), sensiblement dans la zone du diamètre régulier du tuyau.

8. Tuyau selon une des revendications 1 à 7, **caractérisé en ce qu'**il est réalisé en polyamide.

9. Tuyau selon une des revendications 1 à 8, **caractérisé en ce qu'**il est réalisé en polyamide renforcé par fibres de verre.

10. Procédé de fabrication d'un tuyau ou tuyau flexible (1) en matière thermoplastique par extrusion-soufflage, en particulier sous forme de tuyau pour fluide de refroidissement destiné à des moteurs à combustion interne, dans lequel, au niveau d'au moins une extrémité du tuyau, au moins une partie d'un raccord à encliqueter ou raccord à déclic est formée en une étape de travail d'une seule pièce contre le tuyau, des moyens à encliqueter étant réalisés dans le contour extérieur de l'extrémité concernée du tuyau, **caractérisé par** la fabrication d'au moins une tubulure de communication en matière thermoplastique conçue sous forme de pièce séparée, la tubulure de communication étant munie d'une collerette (15) destinée à former un appui étanche contre une surface inverse d'une partie de raccord complémentaire (3) ou d'une pièce d'assemblage, et par l'encliquetage inamovible de la tubulure de communication (14) dans l'extrémité du tuyau.

11. Procédé selon la revendication 10, **caractérisé en ce qu'**une tubulure de communication (14) munie d'une collerette (15) destinée à former un appui pour une pièce de raccord complémentaire (3) ou une pièce d'assemblage, est fabriquée conjointement avec le tuyau en une étape de travail par soufflage sur matrice et **en ce que** la tubulure de communication est séparée du tuyau dans une autre étape de travail pour être insérée de manière inamovible dans une extrémité du tuyau.
